**Europäisches Patentamt**

**European Patent Office**

**Office européen des brevets**

(19)

(11) Numéro de publication : **0 470 005 A1**

## (12) DEMANDE DE BREVET EUROPEEN

(21) Numéro de dépôt : **91402180.3**

(22) Date de dépôt : **02.08.91**

(51) Int. Cl.⁵ : **B60P 3/22,** B60R 3/00, E06C 7/18

(30) Priorité : **03.08.90 FR 9009981**

(43) Date de publication de la demande :
**05.02.92 Bulletin 92/06**

(84) Etats contractants désignés :
**AT BE CH DE DK ES FR GB GR IT LI LU NL SE**

(71) Demandeur : **A.B.R.F. - ATELIERS BRETONS DE REALISATIONS FERROVIAIRES**
**Z.I. Rue Lafayette**
**F-44141 Chateaubriant Cedex (FR)**

(72) Inventeur : **de Sayve, Laurent**
**3, rue Villaret Dejoyeuse**
**F-75017 Paris (FR)**
Inventeur : **de Lastic, Lyonel**
**43, rue du Parc de Glagny**
**F-78000 Versailles (FR)**
Inventeur : **Jastrzebski, Jean**
**48ter, rue des Fours à Chaux**
**F-49000 Angers (FR)**

(74) Mandataire : **Gosse, Michel et al**
**SOSPI 14-16, rue de la Baume**
**F-75008 Paris (FR)**

(54) **Rambarde pour véhicule citerne ou à trémies.**

(57)    Véhicule citerne ou à trémies (1) comportant une passerelle longitudinale (3) à sa partie supérieure permettant l'accès aux différentes ouvertures du sommet, ladite passerelle étant équipée d'une rambarde de sécurité (5), une échelle d'accès (4) à ladite passerelle étant située à l'une des extrémités du véhicule citerne, ladite rambarde (5) étant articulée autour d'un axe longitudinal (6) à l'extrémité inférieure de la rambarde permettant une première position verticale de la rambarde et une seconde position rabattue transversalement contre la passerelle (3), caractérisé en ce que le passage de la rambarde d'une position à l'autre est effectué manuellement au moyen d'un secteur de manoeuvre (7) à portée d'un homme au bas de la citerne du véhicule citerne, ledit secteur de manoeuvre (7) étant relié à la rambarde (5) par des moyens mécaniques (9, 10, 15, 16) de renvoi de mouvement, et en ce que, dans la position rabattue de la rambarde, ledit secteur de manoeuvre couvre au moins deux échelons de ladite échelle d'accès (4).

EP 0 470 005 A1

Jouve, 18, rue Saint-Denis, 75001 PARIS

FIG.1

La présente invention concerne un véhicule citerne ou à trémies comportant une passerelle longitudinale à sa partie supérieure, permettant l'accès aux différentes ouvertures de sommet, ladite passerelle étant équipée d'une rambarde de sécurité et une échelle d'accès à ladite passerelle étant située à l'une des extrémités du véhicule citerne.

Le document européen 0 018 460 décrit un véhicule citerne qui comporte une telle rambarde de sécurité. Cette rambarde est repliable longitudinalement dans son propre plan à la manière d'un parallélogramme déformable. Dans la position repliée de la rambarde, l'échelle d'accès a sa partie inférieure repliée vers le haut. Un système de manoeuvre à commande hydraulique assure la manoeuvre simultanée de la rambarde et de l'échelle d'accès.

Le document EP-A-0 286 379 décrit une rambarde de sécurité pour un véhicule citerne. La rambarde décrite est articulée autour d'un axe longitudinal. La manoeuvre de la rambarde est automatique (pneumatique), et non pas manuelle, par le moyen d'un secteur de manoeuvre accessible du bas de la citerne et relié à la rambarde par des moyens mécaniques de renvoi de mouvement. Par ailleurs, rien n'empêche de monter sur l'échelle lorsque la rambarde est en position couchée.

Le document FR-A-2 063 453 décrit également une rambarde à articulation longitudinale et actionnée manuellement. Cependant, ici, l'actionnement est direct, c'est-à-dire qu'il faut monter sur l'échelle pour atteindre la première portion de la rambarde et la relever directement à la main. Il n'y a donc aucun secteur de manoeuvre accessible du bas de la citerne et rien non plus n'empêche de monter sur l'échelle, la rambarde étant abaissée.

La présente invention a pour but de proposer un système interdisant l'accès à la passerelle si celle-ci n'est pas en position verticale, mais beaucoup plus simple, économique et dont la manoeuvre est assurée manuellement.

L'invention a ainsi pour objet un véhicule citerne ou à trémies comportant une passerelle longitudinale à sa partie supérieure permettant l'accès aux différentes ouvertures du sommet, ladite passerelle étant équipée d'une rambarde de sécurité, une échelle d'accès à ladite passerelle étant située à l'une des extrémités du véhicule citerne, ladite rambarde étant articulée autour d'un axe longitudinal à l'extrémité inférieure de la rambarde permettant une première position verticale de la rambarde et une seconde position rabattue transversalement contre la passerelle, caractérisé en ce que le passage de la rambarde d'une position à l'autre est effectué manuellement au moyen d'un secteur de manoeuvre à portée d'un homme au bas de la citerne du véhicule citerne, ledit secteur de manoeuvre étant relié à la rambarde par des moyens mécanique de renvoi de mouvement, et en ce que, dans la position rabattue de la rambarde, ledit secteur de manoeuvre couvre au moins deux échelons de ladite échelle d'accès.

Selon une autre caractéristique de l'invention, lesdits moyens mécaniques de renvoi de mouvement comprennent un ressort de compensation qui aide le mouvement dans le sens du passage de la rambarde de la position rabattue vers la position relevée.

On va maintenant donner la description d'un exemple de mise en oeuvre de l'invention en se reportant au dessin annexé dans lequel:

La figure 1 est une vue schématique partielle en perspective d'un wagon citerne selon l'invention.

La figure 2 est une vue représentant le mécanisme de manoeuvre de la rambarde de sécurité.

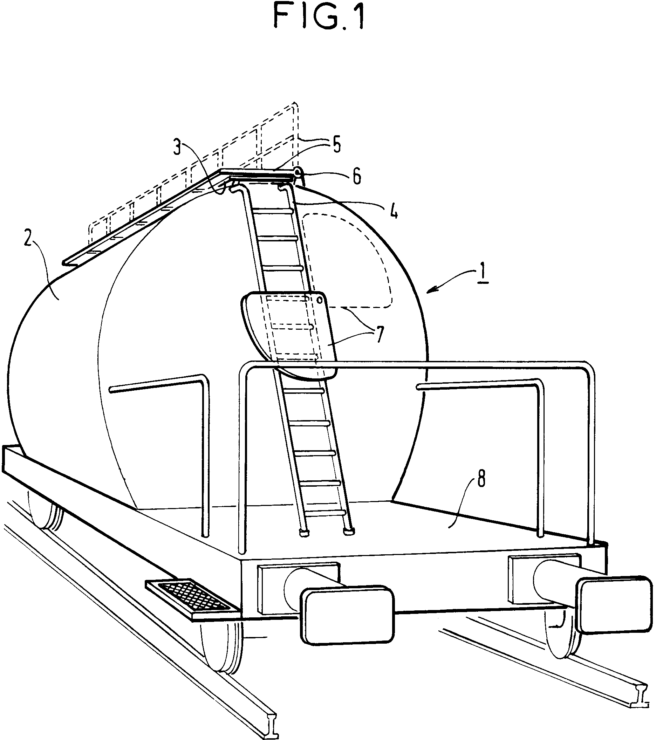

En se reportant à la figure 1, on voit un wagon citerne 1 dont la citerne 2 porte à son sommet une passerelle d'accès 3 aux différentes ouvertures, non visibles, de la citerne. Une échelle d'accès 4 permet d'accéder à la passerelle 3. La passerelle 3 est munie d'une rambarde de sécurité 5 qui peut se rabattre transversalement contre la passerelle autour d'un axe longitudinal 6 situé à l'extrémité inférieure de la rambarde. Sur cette figure, la rambarde est en position rabattue et elle a été représentée en trait interrompu fin en position relevée verticale.

Le passage d'une position à l'autre est effectué manuellement au moyen d'un secteur de manoeuvre 7 qui, dans la position rabattue de la rambarde est situé devant l'échelle 4 et couvre quelques échelons de l'échelle, de préférence au moins deux, de façon à rendre difficile la montée le long de l'échelle 4. Pour relever la rambarde 5, il est nécessaire de pivoter le secteur de manoeuvre 7 dans la position où il est dessiné en trait interrompu fin, ce qui dégage l'accès à l'échelle 4. Ce secteur de manoeuvre est à portée d'un homme situé sur la plate-forme 8 du wagon citerne 1.

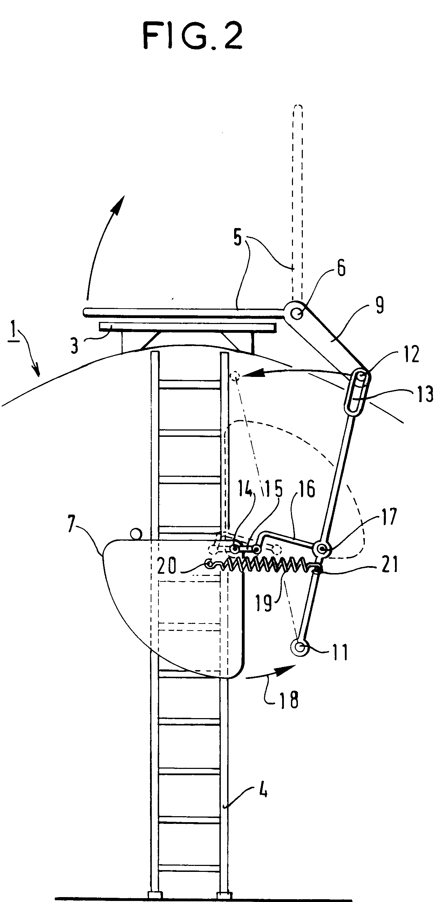

Le secteur de manoeuvre 7 est relié à la rambarde 5 par des moyens mécaniques de renvoi de mouvement décrits ci-après en relation à la figure 2.

Sur cette figure 2, le mécanisme est représenté en trait continu fort correspondant à la position rabattue de la rambarde 5 et on a figuré en trait interrompu fin les éléments de ce mécanisme correspondant à la position relevée de la rambarde.

Un levier 9, dont la rotation de 90° autour de l'axe 6 assure le redressement de la rambarde, est lié rigidement à l'extrémité inférieure de la rambarde. Une tringle de renvoi 10 est articulée à l'une de ses extrémités autour d'un point fixe 11 et son autre extrémité est articulée à l'extrémité libre du levier 9 par une articulation à axe déplaçable, par le moyen d'un téton 12 de l'extrémité du levier 9 guidé dans une lumière 13 de l'extrémité de la tringle 10. Le secteur de manoeuvre 7 pivote autour d'un axe fixe 14 et il se prolonge au delà de l'axe 14 par un petit levier 15 articulé à l'extrémité d'une tige de liaison 16 dont l'autre extrémité est articulée en 17 sur la tringle 10.

Le plan de rotation du secteur de manoeuvre 7 et celui de la tringle 10 sont bien entendu décalés de manière à ne pas se rencontrer et de la même façon, la tige de liaison 16 a une forme en conséquence.

Pour faciliter le mouvement de redressement de la rambarde 5, par la rotation du secteur de manoeuvre 7 dans le sens de la flèche 18, le mécanisme comporte en outre un ressort de compensation 18 tendu entre un point fixe 20 et un point d'attache 21 sur la tringle 10.

Ainsi, comme on le voit, la rambarde 5 est beaucoup plus simple que celle du document antérieur cité ci-dessus puisqu'elle est indéformable et ne comporte qu'une simple articulation longitudinale autour de l'axe 6. En outre, le mécanisme de manoeuvre est très simple, économique et ne nécessite aucun moyen de commande. L'interdiction d'accès à l'échelle 4 est assurée directement par le secteur de manoeuvre 7, ce qui est bien suffisant. Il peut d'ailleurs être recouvert d'une tôle plane empêchant mieux d'atteindre les échelons obturés et obligeant ainsi à faire pivoter le secteur et donc à relever la rambarde pour monter à l'échelle.

L'exemple décrit est relatif à un wagon citerne ou à trémies, mais l'invention s'applique évidemment à tout véhicule citerne ou à trémies.

## Revendications

1/ Véhicule citerne ou à trémies (1) comportant une passerelle longitudinale (3) à sa partie supérieure permettant l'accès aux différentes ouvertures du sommet, ladite passerelle étant équipée d'une rambarde de sécurité (5), une échelle d'accès (4) à ladite passerelle étant située à l'une des extrémités du véhicule citerne, ladite rambarde (5) étant articulée autour d'un axe longitudinal (6) à l'extrémité inférieure de la rambarde permettant une première position verticale de la rambarde et une seconde position rabattue transversalement contre la passerelle (3), caractérisé en ce que le passage de la rambarde d'une position à l'autre est effectué manuellement au moyen d'un secteur de manoeuvre (7) à portée d'un homme au bas de la citerne du véhicule citerne, ledit secteur de manoeuvre (7) étant relié à la rambarde (5) par des moyens mécaniques (9, 10, 15, 16) de renvoi de mouvement, et en ce que, dans la position rabattue de la rambarde, ledit secteur de manoeuvre couvre au moins deux échelons de ladite échelle d'accès (4).

2/ Véhicule citerne selon la revendication 1, caractérisé en ce que lesdits moyens mécaniques de renvoi de mouvement comprennent un ressort de compensation (19) qui aide le mouvement dans le sens du passage de la rambarde de la position rabattue vers la position relevée.

# FIG.1

# FIG.2

EP 0 470 005 A1

Office européen
des brevets

**RAPPORT DE RECHERCHE EUROPEENNE**

Numero de la demande

EP 91 40 2180

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | EP-A-0 286 379 (NAUGHTON) <br> * Revendications; figures * <br> --- | 1 | B 60 P 3/22 <br> B 60 R 3/00 <br> E 06 C 7/18 |
| D,A | FR-A-2 063 453 (LES CONSTRUCTIONS SOUDEES DU COTEAU) <br> * En entier * <br> --- | 1 | |
| A | FR-A-2 087 219 (ATELIERS ET CHANTIERS MONTI) <br> * En entier * <br> ----- | 1 | |

DOMAINES TECHNIQUES RECHERCHES (Int. Cl.5)

B 62 D
B 60 P
B 61 D
B 60 R
E 06 C

Le présent rapport a été établi pour toutes les revendications

| Lieu de la recherche | Date d'achèvement de la recherche | Examinateur |
|---|---|---|
| LA HAYE | 05-11-1991 | PIRIOU J.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P0402)

7